# EUROPEAN PATENT APPLICATION

(11) **EP 2 068 468 A1**
(43) Date of publication of application: **10.06.2009**
(21) Application number: 08160896.0
(22) Date of filing: 22.07.2008
(51) Int. Cl.: H04B 10/155, H01S 3/00

(54) **Tunable LED module**

(30) Priority: 04.12.2007 JP 2007313241
(71) Applicant: Tecdia Co., Ltd., Tokyo 170-6020 (JP)
(72) Inventor: Koyama, Etsuo, Tokyo 170-6020 (JP); Nagai, Yasuo, Tokyo 170-6020 (JP)
(74) Representative: Brötz, Helmut

(57) **Abstract**

The objective of the invention is to provide with a tunable LED module capable of easily selecting a wavelength and reducing particular parts, comparing to that of prior art. The tunable LED module according to the present invention is applicable to a certain short range communication. The module comprises: an LED 1 capable of emitting a light with a certain wavelength band including a desire wavelength; a collimator 2 for collimating the divergent light from the LED 1; an etalon 3 working as a wavelength selector for selecting a light with a plurality of wavelengths including the desired wavelength from the light emitted from the LED 1; a BRF 4 working as an optical tuner selectively tunable the desired wavelength within the wavelengths selected by the wavelength selector; an optical coupler 5, which the light rejected by the BRF 4 enters to and couples with; a LED mounting element 6 made from a material with a high thermal conductivity, such as cupper, cupper alloy, and the like, the element 6 for mounting the LED 1; and an optical receiver 7 for detecting the power of the light with wavelengths excluding the tuned wavelength and then generating light level monitor signal representing the power of the detected light.

## Description

### BACKGROUND OF THE INVENTION

### Technical Field

The present invention relates to a tunable LED (Light Emitting Diode) module for selectively tuning a certain wavelength within the wavelength band of the light emitted from an LED and them outputting the light with the tuned wavelength.

### Description of Related Art

Since generic LEDs have a wide spectrum, they are not suitable to the high speed optical communication. Hitherto, owing to its basic emission principle, there is no simple configuration for selectively tuning a wavelength by applying the lasing principle of LD (Laser Diode). Owing to the wide emission spectrum of an LED, applying the principle of the wavelength selection results in lowering the output power; therefore such idea is not suitable to the long range communication and doesn't exist from the first.

Hereat, it is also known that an Er-doped optical fiber amplifier is used as a light emitting source, a waveguide grating router, resonators, optical amplifiers and so on are positioned on the optical paths from the amplifier, and thereby a light source for communication use is achieved. The light source described in the Patent Document 1 is for WDM (Wavelength Division Multiplexing) communication use, and divides a certain part of the wavelength band of the Er-dope optical fiber amplifier into parts by means of the waveguide grating router.

In the mean while, it is well-known that the application field of LEDs is recently greatly spread and LEDs are used as light sources for, such as, traffic signal, decoration, car illumination, cultivation, and so on. In order to further exploit its application field, vigorous study has been carried out on the higher output-power technology, the white LED technology, and so on, and thereby being to put practical use.
[Patent document 1] Japanese Patent Application Laid-Open Publication No. 2004-350280

However, the tunable light source of prior art described in the Patent Document 1 has problems that hence it uses an Er-doped optical fiber amplifier, a waveguide grating router, and so on, it inevitably has large scale and requires particular parts. As a result, users are forced to use such particular parts, even if they are not necessary. For example, the light source of prior art is hard to apply to short range communication use including communication in a car and the like.

### SUMMARY OF THE INVENTION

Considering the aforementioned state of the art, the objective of the present invention is to provide with a tunable LED module capable of easily selecting a wavelength and reducing particular parts, comparing to that of prior art.

The present invention provides following configurations in order to achieve the aforementioned objective.
(1) The present invention of claim 1 provides a tunable LED module comprising: an LED for emitting light with a certain wavelength band including a desired wavelength; a wavelength selector for selecting light with a plurality of certain wavelengths including said desired wavelength from the light emitted from said LED; an optical tuner for selectively tuning said desired wavelength within the wavelengths selected by said wavelength selector; and an optical coupler, with which the light with the wavelength tuned by said optical tuner couples.

(2) The present invention of claim 2 provides a tunable LED module of claim 1, further comprising: a temperature sensor for detecting the temperature of said LED or its vicinity and then generating temperature detection signal representing the detected temperature; a target temperature signal generator for generating target temperature signal representing target temperature of said LED; a temperature controller for generating temperature control signal used to control temperature deviation from the target temperature within a certain range, the temperature deviation defined on the basis of the temperature detection signal and the target temperature signal; and a variable cooling element for controlling the temperature of said LED responding to the temperature control signal.

(3) The present invention of claim 3 provides a tunable LED module as claimed in claim 1 or claim 2, further comprising: a selected light receiver for detecting the power of the light with the selected wavelengths excluding the wavelength tuned by the optical tuner and then generating light level monitor signal representing to the detected power; a target level signal generator for generating target level signal representing target output level of said LED; a level controller for generating level control signal used to control the output level deviation from the target output level within a certain range, the deviation defined on the basis of the light level monitor signal and the target level signal; and an LED driver for driving the LED responding to the level control signal.

(4) The present invention of claim 4 provides a tunable LED module as claimed in any of preceding claim, further comprising: a partial reflector for reflecting a part of the light having entered from said optical tuner, while transmitting the remaining; a reflected light receiver for detecting the power of the reflected light and then generating reflected light power signal representing the power of the reflected light; a target wavelength signal generator for generating target wavelength signal representing the desired wavelength to be set to said optical tuner; a wavelength controller for generating wavelength control signal used to control the wavelength deviation from the desired wavelength within a certain range, the deviation defined on the basis of the reflected light power signal and the target wavelength signal; and a bias adjust circuit for adjusting the wavelength tuned by said optical tuner responding to the wavelength control signal.

According to the invention of claim 1, it is possible to provide with a tunable LED module capable of easily selecting a wavelength and reducing particular parts, comparing to that of prior art, hence the tunable LED module comprises: an LED for emitting light with a certain wavelength band including a desired wavelength; a wavelength selector for selecting light with a plurality of certain wavelengths including the desired wavelength from the light emitted from the LED; an optical tuner for selectively tuning the desired wavelength within the wavelengths selected by the wavelength selector; and an optical coupler, with which the light with the wavelength tuned by the optical tuner couples.

According to the invention of claim 2, in addition to the aforementioned advantage of claim 1, it is possible to ensure the thermal stability of the LED and thereby increasing the stability of the emitting light, hence the tunable LED module of claim 2 further comprises: a temperature sensor for detecting the temperature of the LED or its vicinity and then generating temperature detection signal representing the detected temperature; a target temperature signal generator for generating target temperature signal representing target temperature of the LED; a temperature controller for generating temperature control signal used to control temperature deviation from the target temperature within a certain range, the temperature deviation defined on the basis of the temperature detection signal and the target temperature signal; and a variable cooling element for controlling the temperature of the LED responding to the temperature control signal.

According to the invention of claim 3, in addition to the aforementioned advantage of claim 1, it is possible to increase the stability of the output level of the LED, hence the tunable LED module of claim 3 further comprises: a selected light receiver for detecting the power of the light with the selected wavelengths excluding the wavelength tuned by the optical tuner and then generating light level monitor signal representing to the detected power; a target level signal generator for generating target level signal representing target output level of the LED; a level controller for generating level control signal used to control the output level deviation from the target output level within a certain range, the deviation defined on the basis of the light level monitor signal and the target level signal; and an LED driver for driving the LED responding to the level control signal.

According to the invention of claim 4, in addition to the aforementioned advantage of claim 1, it is possible to increase the stability of the tuned wavelength, hence the tunable LED module of claim 4 further comprises: a partial reflector for reflecting a part of the light having entered from the optical tuner, while transmitting the remaining; a reflected light receiver for detecting the power of the reflected light and then generating reflected light power signal representing the power of the reflected light; a target wavelength signal generator for generating target wavelength signal representing the desired wavelength to be set to the optical tuner; a wavelength controller for generating wavelength control signal used to control the wavelength deviation from the desired wavelength within a certain range, the deviation defined on the basis of the reflected light power signal and the target wavelength signal; and a bias adjust circuit for adjusting the wavelength tuned by the optical tuner responding to the wavelength control signal.

### BRIEF DESCRIPTION OF THE DRAWINGS

FIG. 1 is a block diagram schematically illustrating configuration of an exemplary tunable LED module according to the present invention.
FIG. 2 is a view schematically illustrating exemplary emission spectrum of the LED used in the tunable LED module and transmission spectrum of the etalon.
FIG. 3 is a view schematically illustrating the emission spectrum of the LED, the transmission spectrum of the etalon, and the rejection spectrum of the BRF.
FIG. 4 is a view schematically illustrating another exemplary configuration of a tunable LED module according to the present invention, the module modified in order to more stabilize the light leaving from the optical coupler.
FIG. 5 is a view schematically illustrating still another exemplary configuration of a part of a tunable LED module according to the present invention, the module modified in order to further stabilize the light leaving from the optical coupler.

### DETAILED DESCRIPTION OF THE PREFERRED EMBODIMENTS

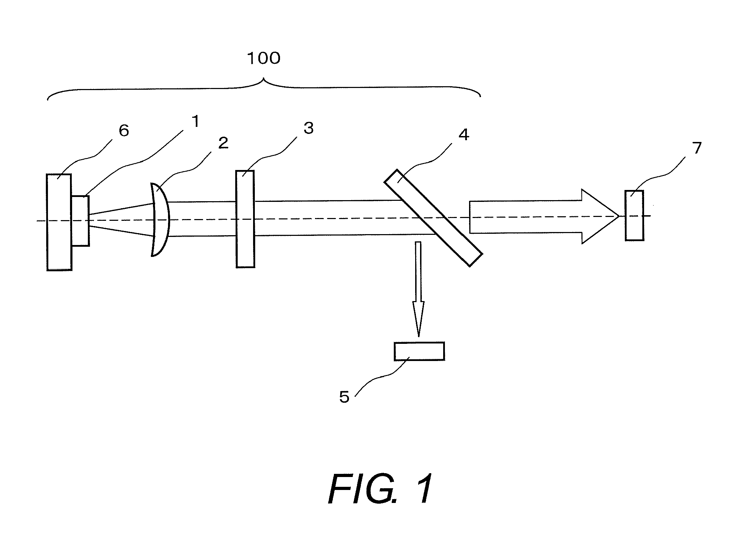

Hereinafter, referring to the accompanying drawings illustrating exemplary configuration, descriptions are made on embodiments according to the present invention. FIG. 1 is a block diagram schematically illustrating configuration of an exemplary tunable LED module according to the present invention. The tunable LED module 100 is applicable to a certain short range communication, for example, communication in a car, LAN (Local Area Network) and so on and comprises as shown in FIG. 1. Namely, the module 100 comprises an LED 1 capable of emitting light with a wavelength band including a desired wavelength, a collimator 2 for collimating a divergent light from the LED 1, an etalon 3 working as a wavelength selector for selecting certain wavelengths including the desired wavelength, a BRF (Band Rejection Filter) 4 working as an optical tuner for selectively tuning the desired wavelength within the plurality of wavelengths selected by the etalon 3, and an optical coupler 5, with which the incident light rejected by the BRF 4 couples.

The tunable LED module 100 may further comprise: an LED mounting element 6 for mounting the LED 1, the element 6 made from materials with high thermal conductivity, such as cupper, cupper alloys, and so on; and an optical receiver 7 for detecting the power of the light with wavelengths excluding the wavelength tuned by the BRF 4 and then generating light level monitor signal representing the detected power. Hereat, a driving circuit not shown is connected to the LED 1. Further, the light level monitor signal may be analogue signal of current, voltage, and so on, or digital signal of them.

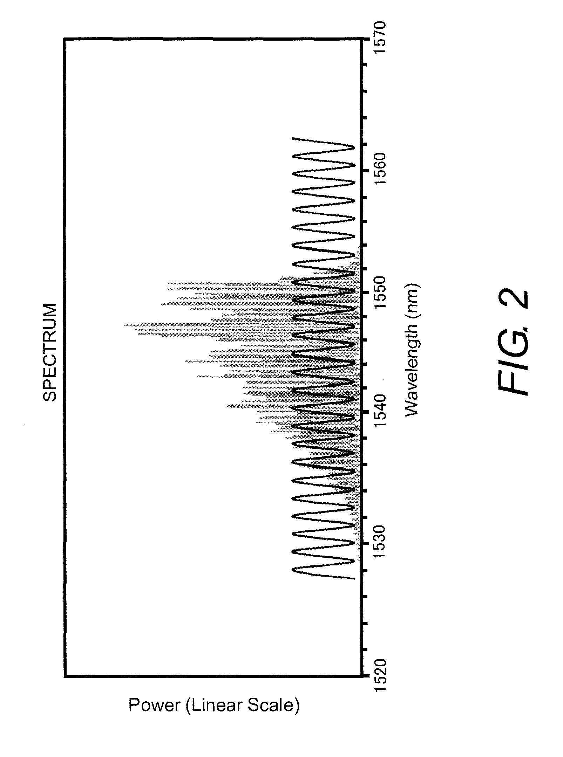

FIG. 2 is a view schematically illustrating exemplary emission spectrum of the LED used in the tunable LED module and transmission spectrum of the etalon. In the FIG. 2, the periodic curve schematically shows the transmission spectrum of the etalon, while the remaining curve illustrates the emission spectrum of the LED.

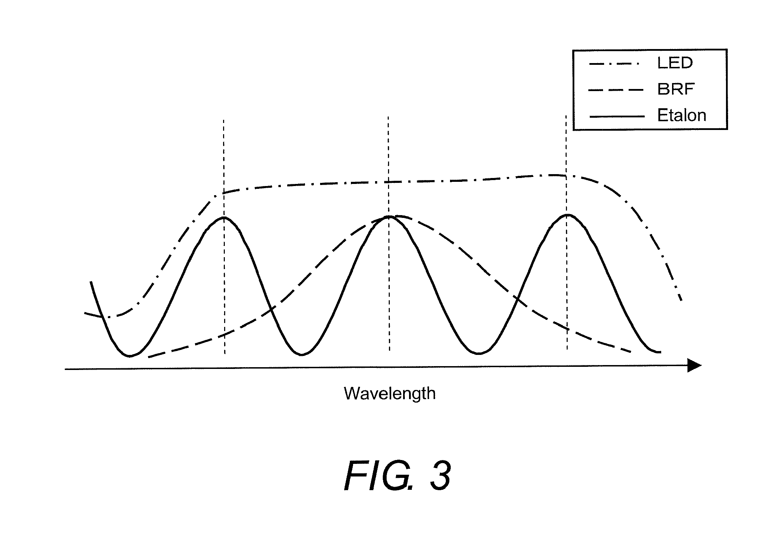

BRF 4 may consist of, for example, a grating, of which diffraction wavelength is controlled by adjusting the refraction index of a liquid crystal in it, the device diffracting light to the incident side. Hereafter, in case that the BRF 4 consists of the grating, the remaining light is considered to substantially transmit. FIG. 3 is a view schematically illustrating the emission spectrum of the LED, the transmission spectrum of the etalon, and the rejection spectrum of the BRF. The tunable LED module 100 cuts the overlapping parts between the transmission spectrum (shown by a broken line) of the etalon 3 and the wide emission spectrum (shown by a dash dot line) of the LED 1 and then selectively tunes the desired wavelength (shown by a solid line) by using the rejection spectrum of the BRF 4.

The optical coupler 5 has, for example, at its incident edge, a coupling lens for converging the light passing therethrough, and thereby causing the light passing the coupling lens to travel into an optical fiber connected with the optical coupler 5. With a configuration described heretofore, the divergent light emitted by the LED is collimated by the collimator 2, light with a plurality of wavelengths available for the aforementioned communication is selected by the etalon 2 from the emitted light, light with the desired wavelength is rejected by the BRF 4, then couples with the optical coupler 5, and finally travels therethrough.

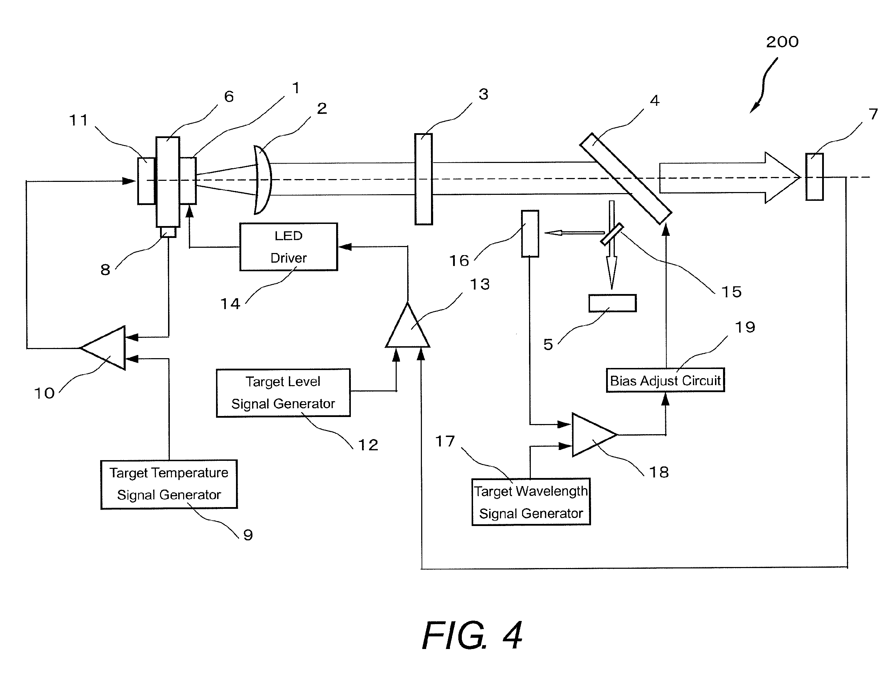

FIG. 4 is a view schematically illustrating another exemplary configuration of a tunable LED module according to the present invention, the module modified in order to more stabilize the light leaving from the optical coupler. In the FIG. 4, the same symbols refer to the same means composing the tunable LED module 100, and their descriptions are omitted.

The tunable LED module 200 comprises a temperature control unit. The temperature control unit has: a temperature sensor 8 for detecting the temperature of the LED mounting element 6 and then generating temperature detection signal representing the detected temperature; a target temperature signal generator 9 for generating target temperature signal representing a target temperature of the LED 1; a temperature controller 10, to which the temperature detection signal and the target temperature signal are input, for generating temperature control signal depending on the temperature deviation from the target temperature, the deviation determined based on these input signal; and a variable cooling element 11 consisting of, such as, the Peltier device for adjusting the temperature of the LED mounting element 6 depending on the temperature control signal output from the temperature controller 10. Here, the temperature sensor 8 may include the thermo-electric device, and thereby directly detecting the temperature of the LED 1 as well as that of the LED mounting element 6. Further, the aforementioned temperature control signal is used to control the temperature deviation from the target temperature within a certain range and is, for example, an analogue voltage signal.

The tunable LED module 200 further comprises an LED level control unit. The LED level control unit has: the optical receiver 7 consisting of such as a photodiode and the like for detecting the power of the light transmitted without being rejected by the BRF 4 and then generating light level monitor signal representing the detected power; a target level signal generator 12 for generating target level signal representing the target output level of the LED 1; a level controller 13, to which the light level monitor signal and the target level signal are input, generating level control signal depending on the level deviation from the target output level determined based on these signal; and an LED driver 14 for driving the LED 1 depending on the level control signal. Here, the aforementioned level control signal is used to control the level deviation from the target output level within a certain range and is, for example, analogue voltage signal.

The tunable LED module 200 further comprises a wavelength control unit. The wavelength control unit has: a partial reflector 15 for partially reflecting light leaving from the BRF 4 to the optical coupler 5, while transmitting the remaining; an optical receiver 16 having the same configuration as the optical receiver 7, detecting the power of the light reflected by the partial reflector 15 and outputting reflected light power signal; a target wavelength signal generator 17 for generating target level signal representing a target wavelength of the BRF 4; a wavelength controller 18, to which the reflected light power signal and the target level signal are input, generating wavelength control signal depending on the wavelength deviation from the target wavelength, the deviation determined based on these signal; and a bias adjust circuit 19 for controlling the rejection (target) wavelength of the BRF 4 depending on the wavelength control signal input from the wavelength control circuit 18, the control performed by, for example, adjusting AC voltage applied to the liquid crystal. Here, the aforementioned wavelength control signal is used to control the wavelength deviation from the target wavelength within a certain wavelength and is, for example, analogue voltage signal.

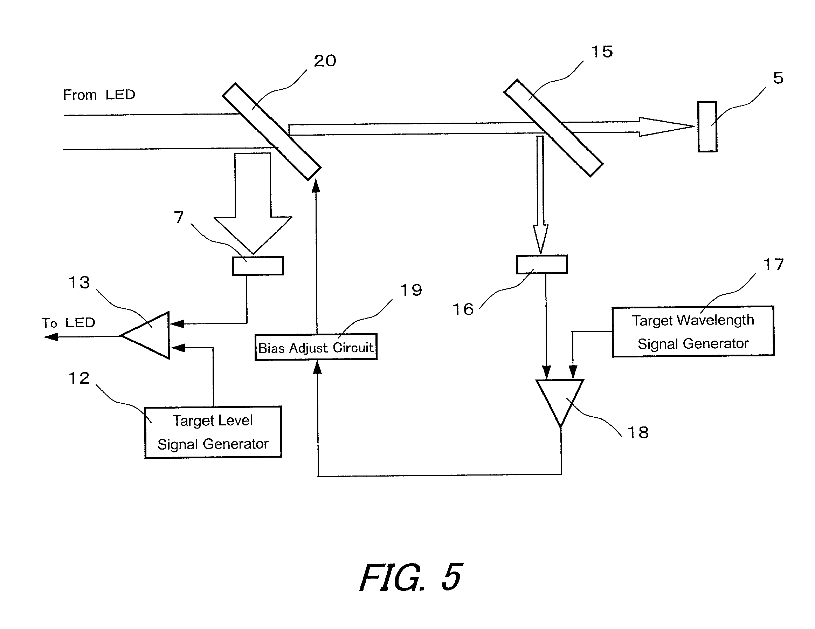

FIG. 5 is a view schematically illustrating still another exemplary configuration of a part of a tunable LED module according to the present invention, the module modified in order to further stabilize the light leaving from the optical coupler. In FIG. 5, a part of the configuration is illustrated that the BRF 4 working as an optical tuner is replaced by a BPF (Band Pass Filter) 20; an optical coupler 5 is aligned to the side where light passing through BPF 20 travels. Hereat, the same function is achievable as the tunable LED module 200 by modifying the LED level control unit and the wavelength control unit of the tunable LED module 300 as follows.

The LED level control unit comprises the optical receiver7, the target level signal generator 12, and the level controller 13, each of which has the same configuration as the corresponding means of the LED level control unit of the tunable LED module 200. Here, the optical receiver 7 receives the light rejected by the BPF 20 without transmitting therethrough.

The wavelength control unit has the partial reflector 15, the optical receiver 16, the target wavelength signal generator 17, the wavelength controller 18, and the bias adjust circuit 19, each of which has the same configuration as the corresponding means of the wavelength controller of the tunable LED module 200. Here, the light transmitting the BPF 20 enters to the partial reflector 15.

The tunable LED module according to the present invention is applicable to the field of the short range optical communication, such as, the communication in a car, LAN, etc., as well as the communication transmitting control signal and another signal by optical signal.

## Claims

1. A tunable LED module, comprising:
an LED for emitting light with a certain wavelength band including a desired wavelength;
a wavelength selector for selecting light with a plurality of certain wavelengths including said desired wavelength from the light emitted from said LED;
an optical tuner for selectively tuning said desired wavelength within the wavelengths selected by said wavelength selector; and
an optical coupler, with which the light with the wavelength tuned by said optical tuner couples.

2. The tunable LED module of claim 1, further comprising:
a temperature sensor for detecting the temperature of said LED or its vicinity and then generating temperature detection signal representing the detected temperature;
a target temperature signal generator for generating target temperature signal representing target temperature of said LED;
a temperature controller for generating temperature control signal used to control temperature deviation from the target temperature within a certain range, the temperature deviation defined on the basis of the temperature detection signal and the target temperature signal; and
a variable cooling element for controlling the temperature of said LED responding to the temperature control signal.

3. The tunable LED module of claim 1, further comprising:
a selected light receiver for detecting the power of the light with the selected wavelengths excluding the wavelength tuned by the optical tuner and then generating light level monitor signal representing to the detected power;
a target level signal generator for generating target level signal representing target output level of said LED;
a level controller for generating level control signal used to control the output level deviation from the target output level within a certain range, the deviation defined on the basis of the light level monitor signal and the target level signal; and
an LED driver for driving the LED responding to the level control signal.

4. The tunable LED module of claim 1, further comprising:
a partial reflector for reflecting a part of the light having entered from said optical tuner, while transmitting the remaining;
a reflected light receiver for detecting the power of the reflected light and then generating reflected light power signal representing the power of the reflected light;
a target wavelength signal generator for generating target wavelength signal representing the desired wavelength to be set to said optical tuner;
a wavelength controller for generating wavelength control signal used to control the wavelength deviation from the desired wavelength within a certain range, the deviation defined on the basis of the reflected light power signal and the target wavelength signal; and
a bias adjust circuit for adjusting the wavelength tuned by said optical tuner responding to the wavelength control signal.
